# EUROPÄISCHE PATENTSCHRIFT

(11) **EP 4 031 785 B1**
(45) Veröffentlichungstag und Bekanntmachung des Hinweises auf die Patenterteilung: **03.01.2024**
(21) Anmeldenummer: 20739350.5
(22) Anmeldetag: 09.07.2020
(51) Int. Cl.: F16J 15/34

(54) **AXIAL MONTIERBARE GLEITRINGDICHTUNGSANORDNUNG**
SLIDE RING SEAL ASSEMBLY WHICH CAN BE AXIALLY MOUNTED
ENSEMBLE GARNITURE D'ÉTANCHÉITÉ MÉCANIQUE POUVANT ÊTRE MONTÉE AXIALEMENT

(30) Priorität: 19.09.2019 DE 102019214252
(43) Veröffentlichungstag der Anmeldung: 27.07.2022
(73) Patentinhaber: EagleBurgmann Germany GmbH & Co. KG, 82515 Wolfratshausen (DE)
(72) Erfinder: MORGENSTERN, Florian, 83022 Rosenheim (DE); RAPP, Christoph, 82054 Sauerlach (DE); FAHNING, Christian, 82377 Penzberg (DE)
(74) Vertreter: Hoefer & Partner Patentanwälte mbB
(86) Internationale Anmeldenummer: PCT/EP2020/069332
(87) Internationale Veröffentlichungsnummer: WO 2021/052649

(56) Entgegenhaltungen:
- WO-A1-2014/180593
- WO-A1-2019/034519
- DE-U1- 9 011 145
- US-A- 5 505 465
- US-A- 5 558 342

## Beschreibung

Die Erfindung betrifft eine Gleitringdichtungsanordnung, welche eine vereinfachte Montage aus Axialrichtung ermöglicht.

Gleitringdichtungen sind aus dem Stand der Technik in unterschiedlichen Ausgestaltungen bekannt. Eine Abdichtung mittels einer Gleitringdichtungsanordnung erfolgt dabei häufig an oder nahe einem Ende einer Welle. Aufgrund von Bauraumproblemen wird häufig versucht, Maschinen, welche mittels einer Gleitringdichtungsanordnung abgedichtet werden, in Axialrichtung möglichst kurz zu bauen. Dabei wird versucht, die Gleitringdichtungsanordnung so weit wie möglich in Richtung des abzudichtenden Bereichs in Axialrichtung einzubauen. Dies kann jedoch zu Montageproblemen führen, da die Gleitringdichtungsanordnung häufig auf einer Wellenhülse fixiert ist, die mit der Welle verbunden ist. Zur Übertragung der Rotationskraft von der mit der Welle verbundenen Wellenhülse auf einen rotierenden Gleitring werden sogenannte Mitnehmer verwendet. Diese müssen mit der Wellenhülse fest verbunden sein, um Drehmoment von der Wellenhülse über den Mitnehmer auf den rotierenden Gleitring zu übertragen. Bisher wird dies dadurch gelöst, dass beispielsweise eine Schraubverbindung in Radialrichtung zwischen dem Mitnehmer und der Wellenhülse vorgenommen wird. Wenn nun die Gleitringdichtungsanordnung allerdings in Axialrichtung zu tief innerhalb des Gehäuses angeordnet ist, ist es nicht mehr möglich, eine derartige Radialverbindung herzustellen, da es nicht möglich ist, mit einem Werkzeug in das Gehäuseinnere zu kommen, um den Mitnehmer radial durch Schrauben an der Wellenhülse zu fixieren oder zu lösen. Aus der DE 90 11 145 U1 ist eine Gleitringdichtungsanordnung bekannt, bei der ein elastisches Element unter Verwendung schiefer Ebenen und einer Schraube verformt wird, um einen Reibschluss zwischen einem Gleitring und einer Welle zur Drehung und Übertragung zu erzeugen. Weiterhin zeigt die WO 2014/180593 A1 eine Gleitringdichtungsanordnung mit einer speziell ausgebildeten Passfeder um eine Drehmomentübertragung zwischen einer Hülse und einem Mitnehmer für den rotierenden Gleitring bereitzustellen.

Es ist daher Aufgabe der vorliegenden Erfindung, eine Gleitringdichtungsanordnung bereitzustellen welche bei einfachem Aufbau und einfacher, kostengünstiger Herstellbarkeit sehr weit in einem Innenbereich eines Gehäuses einer Maschine angeordnet werden kann.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist somit den Vorteil auf, dass eine Montage der Gleitringdichtungsanordnung sehr weit in einem Innenbereich eines Gehäuses einer Maschine möglich ist. Dadurch kann eine axiale Baulänge der Maschine signifikant reduziert werden, da die Gleitringdichtungsanordnung, welche üblicherweise an einem Ende oder nahe einem Ende einer Welle angeordnet ist, sehr tief im Inneren des Gehäuses positionierbar ist. Dies wird erfindungsgemäß dadurch erreicht, dass die Gleitringdichtungsanordnung eine erste Gleitringdichtung einen rotierenden und einen stationären Gleitring aufweist, welche zwischen sich einen Dichtspalt definieren. Ferner umfasst die Gleitringdichtungsanordnung eine Wellenhülse und einen Mitnehmer, welcher die Wellenhülse mit dem rotierenden Gleitring zur Drehmomentübertragung verbindet. Dadurch kann ein Drehmoment von der Wellenhülse, welche mit der rotierenden Welle verbunden ist, über den Mitnehmer auf den rotierenden Gleitring übertragen werden. Weiterhin ist eine Verbindungsanordnung zur Verbindung des Mitnehmers mit der Wellenhülse vorgesehen, wobei die Verbindungsanordnung wenigstens zwei Drehriegel und wenigstens zwei Ausnehmungen in der Wellenhülse umfasst. Jeder Drehriegel umfasst einen Lagerbereich und einen Verriegelungsbereich, wobei der Verriegelungsbereich seitlich über den Lagerbereich vorsteht. Eine Drehachse jedes Drehriegels ist dabei parallel zu einer Mittelachse der Wellenhülse. Dadurch ist es möglich, dass der Drehriegel aus Axialrichtung von außerhalb des Gehäuses betätigt wird und durch Verdrehen mit der Ausnehmung in der Wellenhülse in Eingriff kommt. Dadurch wird eine Drehmomentübertragung von der Wellenhülse auf den Mitnehmer und vom Mitnehmer auf den mit dem Mitnehmer verbundenen rotierenden Gleitring möglich. Hierbei wird eine Formschlussverbindung zwischen der Wellenhülse und dem Mitnehmer durch die Verbindungsanordnung möglich. Ein Formschluss besteht dabei zwischen der Verbindungsanordnung und der Wellenhülse sowie zwischen der Verbindungsanordnung und dem Mitnehmer. Dabei wird der Formschluss zwischen der Verbindungsanordnung und der Wellenhülse durch Drehen der Verbindungsanordnung, vorzugsweise um 90°, erreicht.

Weiter bevorzugt weist der Drehriegel eine Werkzeugaufnahme auf. Dadurch kann der Drehriegel einfach aus Axialrichtung gedreht werden. Die Werkzeugaufnahme ist beispielsweise ein Schlitz oder Kreuzschlitz oder dergleichen für einen Schraubendreher oder ein Innenmehrkant oder Außenmehrkant des Drehriegels.

Besonders bevorzugt ist der Lagerbereich des Drehriegels ein Zylinder, welcher in einer zylindrischen Ausnehmung im Mitnehmer angeordnet ist. Dadurch kann der Drehriegel sicher und einfach in den Mitnehmer eingesteckt werden und gedreht werden. Der Mitnehmer dient somit als Lager für den Drehriegel. Vorzugsweise definiert eine Zylinderachse des Lagerbereiches dabei eine Drehachse des Drehriegels.

Gemäß einer weiteren bevorzugten Ausgestaltung der vorliegenden Erfindung weist der Verriegelungsbereich eine Länge auf, welche mindestens doppelt so lang ist wie ein Durchmesser des zylindrischen Lagerbereichs.

Für eine besonders einfache und kostengünstige Herstellung weist die Ausnehmung zur Aufnahme des Drehriegels in der Wellenhülse vorzugsweise einen bogenförmigen Boden auf.

Weiter bevorzugt ist ein freies Ende des Verriegelungsbereichs ebenfalls bogenförmig ausgebildet. Vorzugsweise ist dabei ein erster Radius des bogenförmigen Bodens in der Wellenhülse gleich einem zweiten Radius des freien Endes des Verriegelungsbereichs des Drehriegels. Dadurch kann ein einfaches Verschwenken des Drehriegels um die Zylinderachse ermöglicht werden.

Gemäß einer weiteren bevorzugten Ausgestaltung der Erfindung ist ein erster Drehriegel zur Verriegelung in eine erste Drehrichtung drehbar und ein zweiter Drehriegel ist zur Verriegelung in eine zweite Drehrichtung drehbar, welche der ersten Drehrichtung entgegengesetzt ist. Dadurch wird sichergestellt, dass ein Drehmoment von der Wellenhülse auf den Mitnehmer in beide Drehrichtungen übertragen werden kann.

Um eine besonders sichere Drehmomentübertragung zu ermöglichen, weist die Verbindungsanordnung ferner eine Sicherungsvorrichtung zur Sicherung einer Position des Drehriegels in der Ausnehmung in der Wellenhülse auf. Die Sicherungsvorrichtung ist vorzugsweise eine Sicherungsschraube, welche unmittelbar neben dem Drehriegel in den Mitnehmer eingeschraubt ist. Dadurch wird ein Verdrehen des Drehriegels in der verriegelten Position in der Wellenhülse verhindert.

Zur Sicherung einer Drehmomentübertragung in beide Drehrichtungen ist vorzugsweise eine erste Sicherungsschraube an einer ersten Umfangsseite eines ersten Drehriegels angeordnet und eine zweite Sicherungsschraube ist an einer zweiten Umfangsseite, entgegengesetzt zur ersten Umfangsseite, an einem zweiten Drehriegel angeordnet. Dadurch ist der erste Drehriegel in die erste Drehrichtung gesichert und der zweite Drehriegel ist in die zweite Drehrichtung gesichert.

Weiter bevorzugt umfasst die Gleitringdichtungsanordnung eine zweite Gleitringdichtung mit rotierendem und stationärem Gleitring, welche zwischen sich einen Dichtspalt definieren. Dadurch ist die Gleitringdichtungsanordnung als Tandem-Anordnung vorgesehen. Hierbei wird die zweite Gleitringdichtung wie die erste Gleitringdichtung mittels einer, vorzugsweise identischen, Verbindungsanordnung an der Wellenhülse gesichert.

Die Gleitringdichtungsanordnung wird hierbei vorzugsweise in einer Pumpe oder einem Verdichter verwendet.

Nachfolgend wird unter Bezugnahme auf die begleitende Zeichnung ein bevorzugtes Ausführungsbeispiel der Erfindung im Detail beschrieben. In der Zeichnung ist:
- Fig. 1: eine schematische Schnittansicht einer Gleitringdichtungsanordnung im montierten Zustand mit verriegelter Verbindungsanordnung,
- Fig. 2: eine schematische Schnittansicht der Gleitringdichtungsanordnung von Fig. 1 im unverriegelten Zustand,
- Fig. 3: eine schematische, vergrößerte Teilschnittansicht der Gleitringdichtungsanordnung von Fig. 1,
- Fig. 4: eine schematische, perspektivische Ansicht eines Drehriegels der Gleitringdichtungsanordnung von Fig. 1,
- Fig. 5: eine schematische Draufsicht der Gleitringdichtungsanordnung von Fig. 1 im unverriegelten Zustand, und
- Fig. 6: eine schematische Draufsicht der Gleitringdichtungsanordnung von Fig. 1 im verriegelten und gesicherten Zustand.

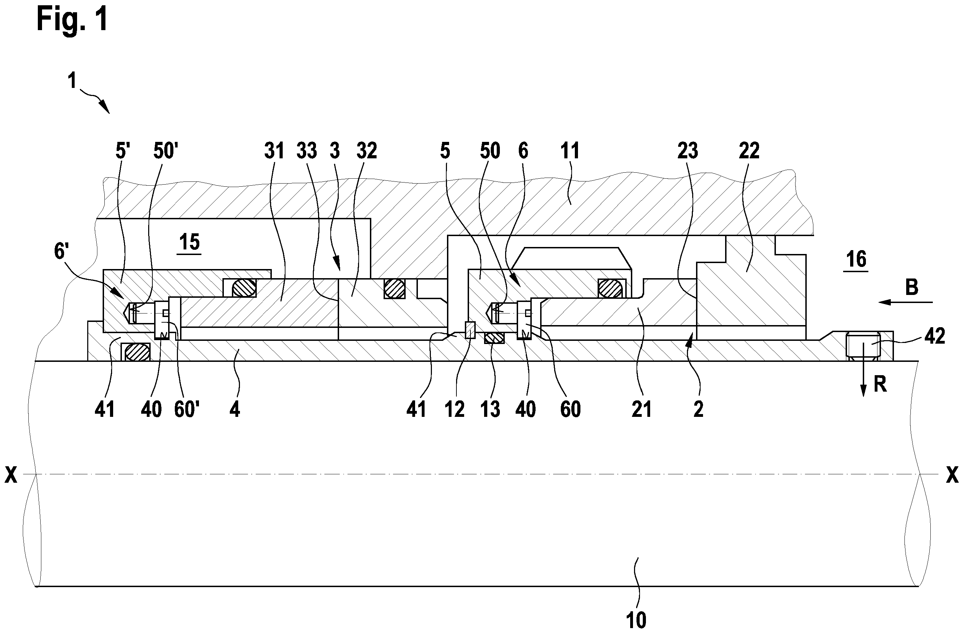

Nachfolgend wird unter Bezugnahme auf die Figuren 1 bis 6 eine Gleitringdichtungsanordnung 1 gemäß einem bevorzugten Ausführungsbeispiel der Erfindung im Detail beschrieben.

Wie aus Fig. 1 ersichtlich ist, umfasst die Gleitringdichtungsanordnung 1 eine erste Gleitringdichtung 2 und eine zweite Gleitringdichtung 3. Die erste Gleitringdichtung 2 umfasst einen rotierenden Gleitring 21 und einen stationären Gleitring 22, welche zwischen sich einen Dichtspalt 23 definieren. Die zweite Gleitringdichtung 3 umfasst einen rotierenden Gleitring 31 und einen stationären Gleitring 32, welche zwischen sich einen Dichtspalt 33 definieren. Die erste und zweite Gleitringdichtung sind in Axialrichtung X-X in Reihe hintereinander angeordnet.

Die Gleitringdichtungsanordnung 1 dichtet eine Produktseite 15 von einer Atmosphärenseite 16 ab.

Wie aus Fig. 1 ersichtlich ist, ist die Gleitringdichtungsanordnung 1 weit in einen Innenbereich eines Gehäuses 11 einer Maschine eingeschoben. Dadurch wird eine kurze axiale Bauweise der Gesamtmaschine erreicht.

Die Gleitringdichtungsanordnung 1 umfasst ferner eine Wellenhülse 4, welche auf einer Welle 10 fixiert ist. Wie aus Fig. 1 ersichtlich ist, ist die Wellenhülse 4 mittels einer Schraube 42 auf der Welle 10 fixiert. Die Schraube 42 wird in Radialrichtung R auf die Welle aufgeschraubt.

Üblicherweise werden Mitnehmer der Gleitringdichtungsanordnung ebenfalls mittels radial zur Welle eingeschraubten Schrauben auf der Wellenhülse 4 fixiert. Durch die Positionierung der Gleitringdichtungsanordnung 1 weit im Inneren des Gehäuses 11 ist dies nicht mehr möglich. Auch ein Lösen einer derartigen radial eingeschraubten Schraube ist nicht mehr möglich. Von daher ist erfindungsgemäß eine Verbindungsanordnung 6 vorgesehen, welche einen Mitnehmer 5, 5' mit der Wellenhülse 4 verbindet und welche in Axialrichtung X-X betätigbar ist.

Wie aus Fig. 1 ersichtlich ist, weist die erste Gleitringdichtung 2 einen ersten Mitnehmer 5 auf, der mit der Wellenhülse 4 verbunden ist und ein Drehmoment von der Wellenhülse 4 auf den ersten rotierenden Gleitring 21 der ersten Gleitringdichtung 2 überträgt. Der Mitnehmer 5 weist Aussparungen 50 auf, in welchen die Verbindungsanordnungen 6 im Mitnehmer gelagert sind.

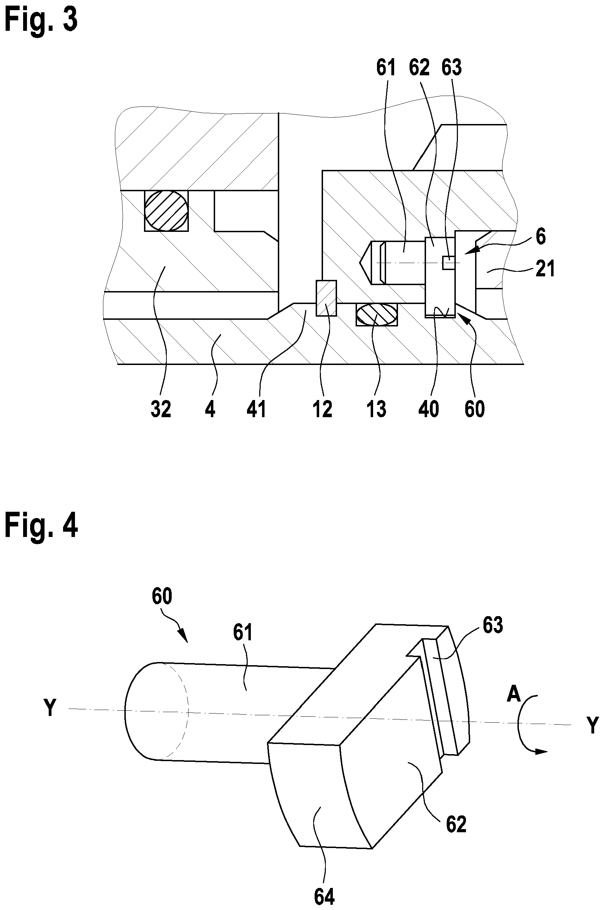

Hierbei ist an der Wellenhülse 4 ein umlaufend verdickter Bereich 41 vorgesehen. Die Verbindungsanordnung 6 umfasst dabei einen Drehriegel 60, welcher im Detail in Fig. 4 gezeigt ist, sowie eine Ausnehmung 40, welche in der Wellenhülse 4 vorgesehen ist.

Am verdickten Bereich 41 sind, wie insbesondere aus Fig. 3 ersichtlich ist, ferner ein Sicherungsring 12 und ein O-Ring 13 angeordnet. Wie aus Fig. 3 ersichtlich ist, ist der O-Ring 13 dabei in Axialrichtung zwischen dem Sicherungsring 12 und der Ausnehmung 40 angeordnet. Der Sicherungsring 12 verhindert dabei eine Axialbewegung des Mitnehmers 5 in Richtung zur zweiten Gleitringdichtung 3.

Der Drehriegel 60 ist im Detail aus Fig. 4 ersichtlich. Neben einem zylindrischen Lagerbereich 61 und einem über den zylindrischen Lagerbereich 61 seitlich vorstehenden Verriegelungsbereich 62 weist der Drehriegel 60 ferner noch einen Werkzeugansatz 63 im Verriegelungsbereich 62 auf. In diesem Ausführungsbeispiel ist der Werkzeugansatz 63 ein Schlitz zum Aufnehmen eines Schraubendrehers oder dergleichen. Ein freies, über den Lagerbereich 61 überstehendes Ende 64 des Verriegelungsbereichs 62 ist bogenförmig ausgeführt. Ein Radius des bogenförmigen Endes 64 entspricht dabei einem Radius eines Bodens der Ausnehmung 40 in der Wellenhülse 4. Wie in Fig. 4 angedeutet, ist der Drehriegel 60 um eine Schwenkachse Y-Y, welche parallel zur Mittelachse in Axialrichtung X-X der Gleitringdichtungsanordnung 1 ist, schwenkbar.

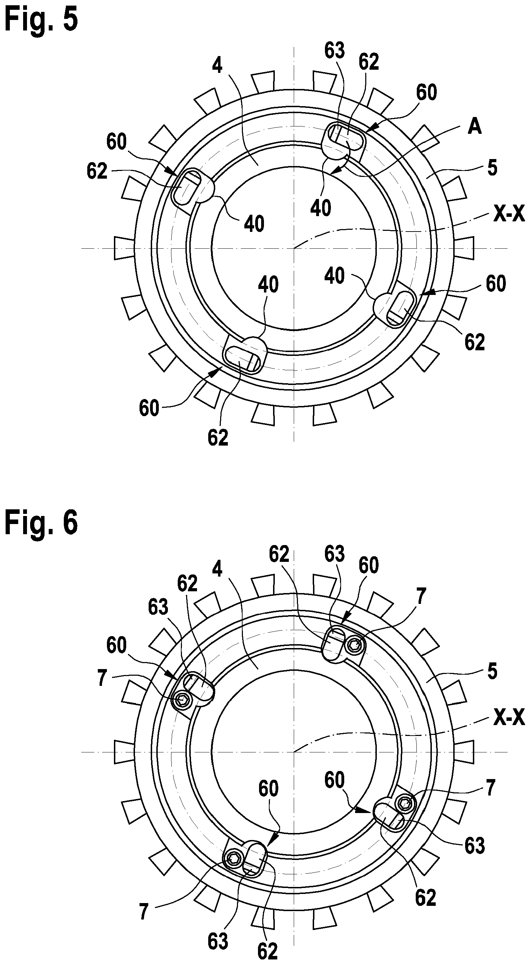

Wie aus den Fig. 5 und 6 ersichtlich ist, sind entlang des Umfangs vier Verbindungsanordnungen 6 mit jeweils einem Drehriegel 60 vorgesehen. Die Verbindungsanordnungen 6 sind dabei entlang des Umfangs in gleichen Abständen angeordnet.

Zur Sicherung einer Verriegelungsposition der Drehriegel 60 umfasst die Gleitringdichtungsanordnung 1 ferner eine Sicherungsvorrichtung 7 in Form von Schrauben. Wie aus Fig. 6 ersichtlich ist, sind die Sicherungsvorrichtungen 7 unmittelbar benachbart in Umfangsrichtung zu den Drehriegeln 60 positioniert. Wie dabei aus Fig. 6 ersichtlich ist, sind die Sicherungsvorrichtungen 7 aneinander in Umfangsrichtung benachbarten Drehriegeln 60 jeweils an der anderen in Umfangsrichtung liegenden Seite der Drehriegel 60 angeordnet. Dadurch wird eine Sicherung der Verbindungsanordnung 6 zwischen Mitnehmer 5 und Wellenhülse 4 in beide Drehrichtungen ermöglicht.

An der zweiten Gleitringdichtung 3 ist eine identische Verbindungsanordnung 6' mit einem Mitnehmer 5' und einer Aussparung 50' sowie einem Drehriegel 60' vorgesehen.

Durch die verbesserte Verbindungsanordnung 6, 6' zwischen den Mitnehmern 5, 5' und der Wellenhülse 4 ist somit eine axiale Montage der Mitnehmer in Richtung des Pfeils B von Fig. 1 möglich. Hierbei wird zuerst die Wellenhülse 4 mittels der Schraube 42 auf der Welle 10 fixiert. Anschließend wird der Mitnehmer 5' der zweiten Gleitringdichtung 3 in Axialrichtung (Pfeil B) über die Wellenhülse 4 geschoben und an der in Fig. 1 gezeigten Position fixiert. Hierzu werden die Drehriegel 60' in Axialrichtung in die Ausnehmungen 50' im Mitnehmer 5' eingeführt und sind dabei in der in Fig. 5 gezeigten Position, d.h. die Verriegelungsbereiche 62 verlaufen im Wesentlichen in Umfangsrichtung. Der als Schlitz ausgebildete Werkzeugansatz 63 der Drehriegel 60' ist dabei jeweils in Radialrichtung ausgerichtet (vgl. Fig. 5). Zur Fixierung des Mitnehmers 5' an der Wellenhülse 4 wird nun mit einem langen, stangenartigen Werkzeug in Axialrichtung X-X das Werkzeug an den Werkzeugansatz 63 jedes Drehriegels 60 angesetzt und, wie in Fig. 5 durch den Pfeil A angedeutet, der Drehriegel 60 um 90° geschwenkt. Dadurch kommt der Verriegelungsbereich 62 mit der Ausnehmung 40 in der Wellenhülse 4 in Kontakt, so dass eine Drehmoment übertragende Verbindung zwischen der Wellenhülse 4 und dem Mitnehmer 5' hergestellt ist. Anschließend wird der rotierende Gleitring 31 und der stationäre Gleitring 32 über die Wellenhülse 4 in die in Fig. 1 gezeigte Position geschoben. Danach erfolgt in gleicher Weise die Montage des Mitnehmers 5 der ersten Gleitringrichtung an der Wellenhülse 4, wobei ebenfalls Drehriegel 60 zuerst in der in Fig. 5 gezeigten Position in die Aussparungen 50 des Mitnehmers 5 eingeführt werden und dann in Richtung des Pfeils A gedreht werden.

Zur Sicherung der verdrehten Position der Drehriegel wird nach dem Verdrehen jeweils noch eine Schraube als Sicherungsvorrichtung 7 unmittelbar benachbart zu den verdrehten Drehriegeln 60 in den Mitnehmer 5' eingeschraubt. Dadurch wird ein Zurückdrehen der Drehriegel 60 verhindert.

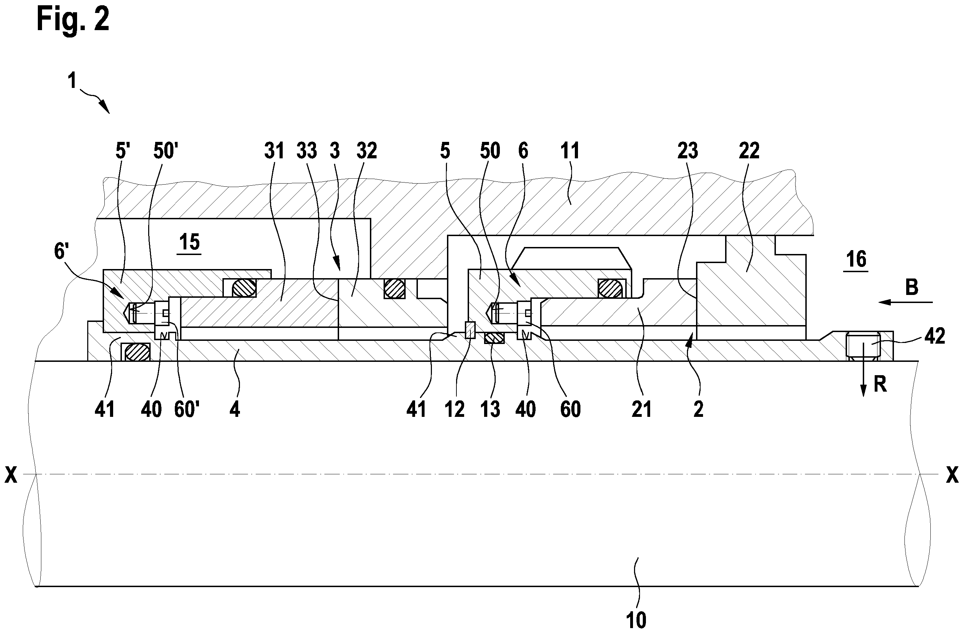

Ein Vergleich der Fig. 1 und 2 verdeutlicht nochmals die erfindungsgemäße geschickte Drehmomentverbindung zwischen den Mitnehmern 5 und der Wellenhülse 4. Fig. 2 zeigt die Drehriegel 60 im nicht verschwenkten Zustand, in dem die bogenförmigen Enden nicht in der Ausnehmung 40 in der Wellenhülse 4 angeordnet sind. Fig. 1, welche die verschwenkten, d.h. verriegelten Positionen der Drehriegel 60 zeigt, verdeutlicht, dass die Drehriegel 60 um 90° geschwenkt wurden, so dass die Verriegelungsbereiche 62 der Drehriegel 60 sich in Eingriff mit den Ausnehmungen 40 in der Wellenhülse 4 befinden. Dadurch kann ein Drehmoment von der Wellenhülse 4 über die in der Ausnehmung 40 befindlichen Drehriegel 60 auf die Mitnehmer 5 bzw. 5` übertragen werden.

Um die Wellenhülse 4 nicht unnötig durch die Ausnehmungen 40 zu schwächen, weist diese den verdickten Bereich 41 auf, welcher radial innerhalb der Mitnehmer 5 bzw. 5' vorgesehen ist. Die Ausnehmungen 40 in der Wellenhülse 4 können beispielsweise mittels eines Fräsers oder dergleichen hergestellt werden. Dadurch ergibt sich der bogenförmige Boden in den Ausnehmungen 40. Ein Radius dieses bogenförmigen Bodens der Ausnehmung 40 entspricht dabei vorzugsweise einem Radius des bogenförmigen Endes 64 des Drehriegels 60.

Somit kann eine einfache und kostengünstige Verbindungsanordnung 6, 6' zwischen Mitnehmern 5, 5' und der Wellenhülse 4 ermöglicht werden. Die Drehriegel 60, 60' können dabei als kostengünstig herstellbare Bauteile, insbesondere Gussteile, bereitgestellt werden. Eine Montage der Drehriegel ist durch einen einfachen, 90°-Schwenkvorgang auf einfache Weise umgesetzt. Eine zusätzliche Sicherung der Position der Drehriegel erfolgt durch die Sicherungsvorrichtungen 7.

### Bezugszeichenliste

- 1: Gleitringdichtungsanordnung
- 2: erste Gleitringdichtung
- 3: zweite Gleitringdichtung
- 4: Wellenhülse
- 5, 5`: Mitnehmer
- 6, 6`: Verbindungsanordnung
- 7: Sicherungsvorrichtung
- 10: Welle
- 11: Gehäuse
- 12: Sicherungsring
- 13: O-Ring
- 15: Produktseite
- 16: Atmosphärenseite
- 21: rotierender Gleitring
- 22: stationärer Gleitring
- 23: Dichtspalt
- 31: rotierender Gleitring
- 32: stationärer Gleitring
- 33: Dichtspalt
- 40: Ausnehmung
- 41: verdickter Bereich der Wellenhülse
- 42: Schraube
- 50, 50': Aussparung im Mitnehmer
- 60, 60': Drehriegel
- 61: Lagerbereich
- 62: Verriegelungsbereich
- 63: Werkzeugansatz/Schlitz
- 64: bogenförmiges Ende des Verriegelungsbereichs
- A: Schwenkrichtung des Drehriegels
- B: axiale Montagerichtung
- R: Radialrichtung
- X-X: Mittelachse der Gleitringdichtungsanordnung
- Y-Y: Schwenkachse

## Patentansprüche

1. Gleitringdichtungsanordnung, umfassend
- eine erste Gleitringdichtung (2) mit einem rotierenden Gleitring (21) und einem stationären Gleitring (22), welche zwischen sich einen Dichtspalt (23) definieren,
- eine Wellenhülse (4),
- einen Mitnehmer (5), welcher die Wellenhülse (4) mit dem rotierenden Gleitring (21) verbindet und welcher eingerichtet ist, eine Rotation der Wellenhülse (4) auf den rotierenden Gleitring (21) zu übertragen,
- eine Verbindungsanordnung (6) zur Verbindung der Wellenhülse (4) mit dem Mitnehmer (5),
- wobei die Verbindungsanordnung (6) wenigstens zwei Drehriegel (60) und wenigstens zwei Ausnehmungen (40) in der Wellenhülse (4) aufweist,
- wobei jeder der Drehriegel (60) einen Lagerbereich (61) und einen Verriegelungsbereich (62) aufweist, und
- wobei eine Drehachse (Y-Y) jedes Drehriegels (60) parallel zu einer Mittelachse (X-X) der Wellenhülse (4) ist,
**dadurch gekennzeichnet, dass** der Veriegelungsbereich (62) seitlich über den Lagerbereich (61) vorsteht.

2. Gleitringdichtungsanordnung nach Anspruch 1, wobei jeder Drehriegel (60) eine Werkzeugaufnahme (63) aufweist.

3. Gleitringdichtungsanordnung nach einem der vorhergehenden Ansprüche, wobei der Lagerbereich (61) des Drehriegels (60) ein Zylinder ist, welcher in einer zylindrischen Aussparung (50) im Mitnehmer (5) angeordnet ist.

4. Gleitringdichtungsanordnung nach Anspruch 3, wobei eine Länge des Verriegelungsbereichs (62) mindestens doppelt so lange ist wie ein Durchmesser des zylindrischen Lagerbereichs (61).

5. Gleitringdichtungsanordnung nach einem der vorhergehenden Ansprüche, wobei die Ausnehmung (40) in der Wellenhülse (4) einen bogenförmigen Boden in der Wellenhülse (4) aufweist.

6. Gleitringdichtungsanordnung nach einem der vorhergehenden Ansprüche, wobei ein freies Ende (64) des Verriegelungsbereichs (62) des Drehriegels (60) bogenförmig ist.

7. Gleitringdichtungsanordnung nach einem der vorhergehenden Ansprüche, wobei ein erster Drehriegel (60) zur Verriegelung in eine erste Drehrichtung drehbar ist und ein zweiter Drehriegel (60) zur Verriegelung in eine zweite Drehrichtung drehbar ist, welche der ersten Drehrichtung entgegengesetzt ist.

8. Gleitringdichtungsanordnung nach einem der vorhergehenden Ansprüche, wobei die Verbindungsanordnung (6) ferner eine Sicherungsvorrichtung (7) zur Sicherung einer Verriegelungsposition des Drehriegels (60) in der Ausnehmung (40) der Wellenhülse (4) umfasst.

9. Gleitringdichtungsanordnung nach Anspruch 8, wobei eine erste Sicherungsvorrichtung (7) an einer ersten, in Umfangsrichtung gerichteten Seite eines ersten Drehriegels angeordnet ist und eine zweite Sicherungsvorrichtung (7) an einer zweiten, in Umfangsrichtung gerichteten Seite, welche entgegengesetzt zur ersten Umfangsrichtung ist, eines zweiten Drehriegels angeordnet ist.

10. Gleitringdichtungsanordnung nach Anspruch 8 oder 9, wobei die Sicherungsvorrichtung (7) eine Sicherungsschraube ist.

11. Gleitringdichtungsanordnung nach einem der vorhergehenden Ansprüche, ferner umfassend eine zweite Gleitringdichtung (3) mit einem rotierenden Gleitring (31) und einem stationären Gleitring (32), welche zwischen sich einen Dichtspalt (33) definieren sowie einen Mitnehmer (5`), welcher den rotierenden Gleitring (31) mit der Wellenhülse (4) mittels einer Verbindungsanordnung (6`) verbindet.

## Claims

1. A mechanical seal arrangement comprising
- a first mechanical seal (2) comprising a rotating slide ring (21) and a stationary slide ring (22) defining a sealing gap (23) therebetween
- a shaft sleeve (4),
- a driver (5) which connects the shaft sleeve (4) to the rotating slide ring (21) and which is arranged to transmit rotation of the shaft sleeve (4) to the rotating slide ring (21)
- a connecting arrangement (6) for connecting the shaft sleeve (4) to the driver (5),
- wherein the connection arrangement (6) comprises at least two rotary locks (60) and at least two recesses (40) in the shaft sleeve (4),
- wherein each of the rotary locks (60) has a bearing portion (61) and a locking portion (62), and
- wherein a rotational axis (Y-Y) of each rotary lock (60) is parallel to a central axis (X-X) of the shaft sleeve (4),
**characterized in that**
- the locking portion (62) projecting laterally beyond the bearing portion (61).

2. The mechanical seal arrangement according to claims 1, wherein each rotary lock (60) comprises a tool holder (63).

3. The mechanical seal arrangement according to one of the preceding claims, wherein the bearing portion (61) of the rotary lock (60) is a cylinder which is arranged in a cylindrical recess (50) in the driver (5).

4. The mechanical seal arrangement according to claim 3, wherein a length of the locking portion (62) is at least twice as long as a diameter of the cylindrical bearing portion (61).

5. The mechanical seal arrangement according to one of the preceding claims, wherein the recess (40) in the shaft sleeve (4) has an arcuate bottom in the shaft sleeve (4).

6. The mechanical seal arrangement according to one of the preceding claims, wherein a free end (64) of the locking portion (62) of the rotary lock (60) is arc-shaped.

7. The mechanical seal arrangement according to one of the preceding claims, wherein a first rotary lock (60) is rotatable for locking in a first rotational direction and a second rotary lock (60) is rotatable for locking in a second rotational direction opposite to the first rotational direction.

8. The mechanical seal arrangement according to one of the preceding claims, wherein the connection arrangement (6) further comprises a securing device (7) for securing a locking position of the rotary lock (60) in the recess (40) of the shaft sleeve (4).

9. The mechanical seal arrangement according to claim 8, wherein a first securing device (7) is arranged at a first, circumferentially directed side of a first rotary lock and a second securing device (7) is arranged at a second, circumferentially directed side, which is opposite to the first circumferential direction, of a second rotary lock.

10. The mechanical seal arrangement according to claims 8 or 9, wherein the securing device (7) is a securing screw.

11. The mechanical seal arrangement according to one of the preceding claims, further comprising a second mechanical seal (3) having a rotating slide ring (31) and a stationary slide ring (32) defining a sealing gap (33) therebetween and a driver (5') connecting the rotating slide ring (31) to the shaft sleeve (4) using a connecting arrangement (6').

## Revendications

1. Ensemble garniture d'étanchéité à bague de glissement comprenant
- une première garniture d'étanchéité à bague de glissement (2) avec une bague de glissement rotative (21) et une bague de glissement stationnaire (22) qui définissent entre elles une fente d'étanchéité (23),
- une chemise d'arbre (4),
- un élément d'entraînement (5) qui relie la chemise d'arbre (4) à la bague de glissement rotative (21) et qui est conçu afin de transmettre une rotation de la chemise d'arbre (4) à la bague de glissement rotative (21),
- un ensemble de liaison (6) pour la liaison de la chemise d'arbre (4) avec l'élément d'entraînement (5),
- dans lequel l'ensemble de liaison (6) présente au moins deux tourniquets (60) et au moins deux évidements (40) dans la chemise d'arbre (4),
- dans lequel chacun des tourniquets (60) présente une zone de support (61) et une zone de verrouillage (62),
et
- dans lequel un axe de rotation (Y-Y) de chaque tourniquet (60) est parallèle à un axe médian (X-X) de la chemise d'arbre (4),
**caractérisé en ce que** la zone de verrouillage (62) dépasse latéralement de la zone de support (61).

2. Ensemble garniture d'étanchéité à bague de glissement selon la revendication 1, dans lequel chaque tourniquet (60) présente un logement d'outil (63).

3. Ensemble garniture d'étanchéité à bague de glissement selon l'une quelconque des revendications précédentes, dans lequel la zone de support (61) du tourniquet (60) est un cylindre qui est agencé dans un évidement (50) cylindrique dans l'élément d'entraînement (5).

4. Ensemble garniture d'étanchéité à bague de glissement selon la revendication 3, dans lequel une longueur de la zone de verrouillage (62) est au moins deux fois plus longue qu'un diamètre de la zone de support (61) cylindrique.

5. Ensemble garniture d'étanchéité à bague de glissement selon l'une quelconque des revendications précédentes, dans lequel l'évidement (40) dans la chemise d'arbre (4) présente un fond arqué dans la chemise d'arbre (4).

6. Ensemble garniture d'étanchéité à bague de glissement selon l'une quelconque des revendications précédentes, dans lequel une extrémité libre (64) de la zone de verrouillage (62) du tourniquet (60) est arquée.

7. Ensemble garniture d'étanchéité à bague de glissement selon l'une quelconque des revendications précédentes, dans lequel un premier tourniquet (60) est rotatif pour le verrouillage dans un premier sens de rotation et un second tourniquet (60) est rotatif pour le verrouillage dans un second sens de rotation qui est opposé au premier sens de rotation.

8. Ensemble garniture d'étanchéité à bague de glissement selon l'une quelconque des revendications précédentes, dans lequel l'ensemble de liaison (6) comprend de plus un dispositif de fixation (7) pour la fixation d'une position de verrouillage du tourniquet (60) dans l'évidement (40) de la chemise d'arbre (4).

9. Ensemble garniture d'étanchéité à bague de glissement selon la revendication 8, dans lequel un premier dispositif de fixation (7) est agencé au niveau d'un premier côté dirigé dans le sens périphérique d'un premier tourniquet et un second dispositif de fixation (7) est agencé au niveau d'un second côté dirigé dans le sens périphérique qui est opposé au premier sens périphérique, d'un second tourniquet.

10. Ensemble garniture d'étanchéité à bague de glissement selon la revendication 8 ou 9, dans lequel le dispositif de fixation (7) est une vis de fixation.

11. Ensemble garniture d'étanchéité à bague de glissement selon l'une quelconque des revendications précédentes, comprenant de plus une seconde garniture d'étanchéité à bague de glissement (3) avec une bague de glissement rotative (31) et une bague de glissement stationnaire (32) qui définissent entre elles une fente d'étanchéité (33) ainsi qu'un élément d'entraînement (5') qui relie la bague de glissement rotative (31) à la chemise d'arbre (4) au moyen d'un ensemble de liaison (6').
